# EUROPEAN PATENT APPLICATION

(11) **EP 3 367 753 A1**
(43) Date of publication of application: **29.08.2018**
(21) Application number: 17805581.0
(22) Date of filing: 28.04.2017
(51) Int. Cl.: H05B 33/08

(54) **BLUETOOTH BULB LAMP**

(30) Priority: 30.05.2016 CN 201620514941 U
(71) Applicant: Shenzhen JBT Smart Lighting Co., Ltd., Shenzhen, Guangdong 518104 (CN)
(72) Inventor: ZHANG, Wenbin, Shenzhen, Guangdong 518104 (CN); CHEN, Huiping, Shenzhen, Guangdong 518104 (CN); GUO, Guangli, Shenzhen, Guangdong 518104 (CN); HUANG, Xin, Shenzhen, Guangdong 518104 (CN); PENG, Zhiguang, Shenzhen, Guangdong 518104 (CN)
(74) Representative: Gill Jennings & Every LLP
(86) International application number: PCT/CN2017/082312
(87) International publication number: WO 2017/206636

(57) **Abstract**

A Bluetooth bulb lamp comprises: a bulb lamp shell assembly (1); a control module (2) located inside of the bulb lamp shell assembly (1); a Bluetooth mesh module (3) used for receiving an external control signal via Bluetooth, coupled to the control module (2), and located on a surface of the bulb lamp shell assembly (1); a light-emitting unit (4) located inside of the bulb lamp shell assembly (1); a Bluetooth control circuit (5) used for controlling lighting unit, coupled to the control module (2) and the light-emitting unit (4). The beneficial effect of the Bluetooth bulb lamp of present disclosure is to realize functions of remote adjustment of brightness, adjustment of color, timing, music colors, scene mode etc., to facilitate people's life and increase diversify and interest of smart home lighting.

## Description

### TECHNICA FIELD

The present disclosure relates to bulb lamp and, particularly, to a Bluetooth bulb lamp.

### BACKGROUND

With the popularity of LED technology, more and more LED lightings come into people's lives. Almost all wireless dimming bulb lamp currently on the market apply wireless radio frequency control technology. The wireless radio frequency control technology has weak anti-interference ability, low reliability and is inconvenient to form network. The wireless radio frequency control technology cannot achieve scene mode and music colors functions etc. Moreover, in the prior art, there is a technical bottleneck in integrating lighting function and the Bluetooth communication function of the lamp.

### TECHNICAL PROBLEM

The present disclosure provides a wireless bulb lamp to solve the technical problem in the prior art that the lighting device is difficult to realize the remote diversification operation of the lamp, and the technical bottleneck in integrating lighting function and the Bluetooth communication function of the lamp.

### TECHNICAL SCHEME

The technical scheme of the present disclosure is implemented as follows.

A Bluetooth bulb lamp, comprises:
bulb lamp shell assembly;
a control module located inside of the bulb lamp shell assembly;
a Bluetooth mesh module used for receiving an external control signal via Bluetooth, coupled to the control module, and located on a surface of the bulb lamp shell assembly;
a light-emitting unit located inside of the bulb lamp shell assembly; and
a Bluetooth control circuit used for controlling lighting unit, coupled to the control module and the light-emitting unit.

The Bluetooth bulb lamp of present discourse, further comprises:
a power source driving module used for connecting to the utility power supply and providing DC power, coupled to the light-emitting unit;
a Bluetooth power supply module used for step-down DC power supply of the power source driving module, coupled to the power source driving module and the Bluetooth control circuit.

The Bluetooth bulb lamp of present discourse, wherein the bulb lamp shell assembly comprises a bulb mask, a lamp panel, a bulb lamp shell, a circuit board and a lamp cap connecting portion;
the bulb lamp cover buckled on front side of the bulb lamp shell to form a receiving chamber, the lamp panel is disposed in the receiving chamber and fixed to the bulb lamp shell;
the lamp cap connecting portion is connected to rear side of the bulb lampshell, the circuit board is fixed inside the bulb lamp housing;
the light emitting unit is in the lamp panel;
the control module and the Bluetooth control circuit are disposed in the circuit board, the Bluetooth mesh module is disposed on outer surface of the bulb lamp shell.

The Bluetooth bulb lamp of present discourse, wherein the Bluetooth control circuit comprises:
a first Bluetooth soldering plate, coupled to connecting terminals of the control module and the Bluetooth power supply module;
a plurality of MOS transistors, separately connected to connecting terminals of the first Bluetooth soldering plate; and
a second Bluetooth soldering plate, coupled to the light-emitting unit, wherein the plurality of MOS transistors are separately coupled to connecting terminals of the second Bluetooth soldering plate.

The Bluetooth bulb lamp of present discourse, wherein the light-emitting unit comprises a unit soldering plate, a plurality of cold color temperature LED monochrome lamps, a plurality of warm color temperature LED monochrome lamps and a plurality of RGB lamps;
each RGB lamp comprises a R lamp, a G lamp and a B lamp;
the unit soldering plate comprises a plurality of cathode terminal and an anode terminal, the plurality of cathode terminals and the anode terminal are separately coupled to the second Bluetooth soldering plate;
the plurality of cathode terminals are separately coupled to one side of the cold color temperature LED monochrome lamps, the warm color temperature LED monochrome lamps, the plurality of R lamps, the G lamps and the B lamps;
the anode terminal is coupled to the power source driving module, and another side of the cold color temperature LED monochrome lamps, the warm color temperature LED monochrome lamps, the plurality of R lamps, the G lamps and the B lamps.

The Bluetooth bulb lamp of present discourse, further comprises a radio frequency module, coupled to the control module.

The Bluetooth bulb lamp of present discourse, wherein the radio frequency module comprises:
a radio frequency circuit, coupled to the control module;
a radio frequency antenna coupled to the radio frequency circuit.

The Bluetooth bulb lamp of present discourse, wherein the power source driving module comprises:
an input used for accessing electric supply;
a rectifier circuit coupled to the AC input terminal;
a filter circuit coupled to the rectifier circuit;
a drive control circuit coupled to the filter circuit; and
a DC output circuit coupled to the drive control circuit.

The Bluetooth bulb lamp of present discourse, wherein the Bluetooth power supply module comprises:
a linear buck circuit coupled to the DC output circuit;
a Bluetooth filter circuit coupled to the Bluetooth control circuit.

### BENEFICIAL EFFECT

The beneficial effect of the Bluetooth bulb lamp of present disclosure is to realize functions of remote adjustment of brightness, adjustment of color, timing, music colors, scene mode etc., to facilitate people's life and increase diversify and interest of smart home lighting.

### BRIEF DESCRIPTION OF THE DRAWINGS

Implementations are described by way of example only with reference to the attached figures.
FIG. 1 is a block diagram of one embodiment of a Bluetooth bulb lamp.
FIG. 2 is a schematic diagram of connection of a control module of one embodiment.
FIG. 3 is a schematic diagram of a Bluetooth control circuit of one embodiment of the Bluetooth bulb lamp.
FIG. 4 is a schematic diagram of a light-emitting unit of one embodiment of the Bluetooth bulb lamp.
FIG. 5 is a schematic diagram of a power source driving module of one embodiment of the Bluetooth bulb lamp.
FIG. 6 is a schematic diagram of a Bluetooth power supply module of one embodiment of the Bluetooth bulb lamp.
FIG. 7 is a schematic view of a bulb lamp shell assembly of one embodiment of the Bluetooth bulb lamp.

### DETAILED DESCRIPTION

For a clear understanding of the technical features, objects and effects of the present disclosure, specific embodiments of the present disclosure will now be described in detail with reference to the accompanying drawings. It is to be understood that the following description is merely exemplary embodiments of the present disclosure, and is not intended to limit the scope of the present disclosure.

A Bluetooth bulb lamp 100 is provided in the present disclosure. An object of the present disclosure is to apply Bluetooth mesh control technology in a LED bulb to realize functions of free networking, remotely controlling dimming and music dazzle of the bulb etc., by intelligent terminal controller or remote control, to meet the different needs of different people. The Bluetooth bulb lamp 100 has an excellent handling and a good experience.

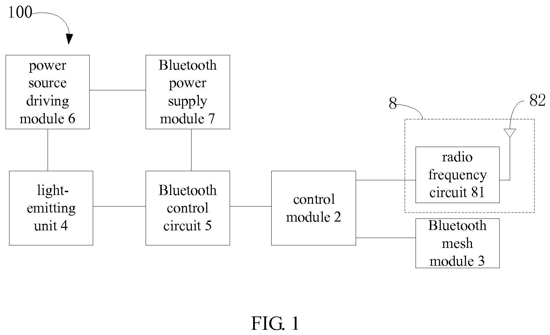

Referring to FIG. 1, FIG. 1 is a block diagram of a Bluetooth bulb lamp 100 provided by present disclosure. The Bluetooth bulb lamp 100 includes a bulb lamp shell assembly 1, a control module 2, a Bluetooth mesh module 3, a light-emitting unit 4, a Bluetooth control circuit 5, a power source driving module 6 and a Bluetooth power supply module 7.

The control module 2 is located inside of the bulb lamp shell assembly 1.

The Bluetooth mesh module 3 for receiving an external control signal via Bluetooth is coupled to the control module 2.

The light-emitting unit 4 is located inside of the Bluetooth power supply module 7.

The Bluetooth control circuit 5 for controlling lighting unit 4 is coupled to the control module 2 and the light-emitting unit 4.

The power source driving module 6 for connecting to the utility power supply and providing DC power is coupled to the light-emitting unit 4.

The Bluetooth power supply module 7 for step-down DC power supply of the power source driving module 6, is coupled to the power source driving module 6 and the Bluetooth control circuit 5.

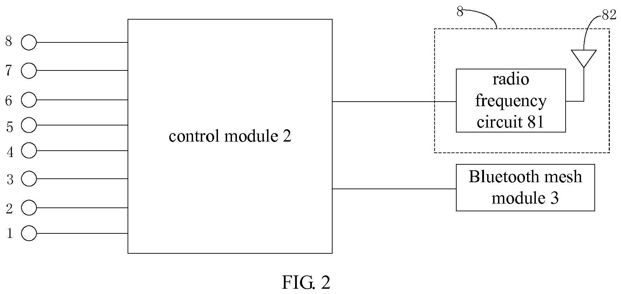

Referring to FIG. 2, FIG. 2 is a schematic diagram of the connection of the control module 2 according to the present invention. The control module 2 includes eight connecting terminals and is connected to a radio frequency module 8 and the Bluetooth mesh module 3. The Control module 2 preferably built-in 16KB capacity data memory (SRAM), embedded 32-bit high-performance MCU and 48MHZ maximum clock signal. Powerful storage capabilities of the Control module 2 provide sufficient capacity to write control programs for a wide variety of control functions.

The Radio frequency module 8 includes a radio frequency circuit 81 and a radio frequency antenna 82. The radio frequency circuit 81 is coupled to the control module 2. The radio frequency antenna 82 is coupled to the radio frequency circuit 81.

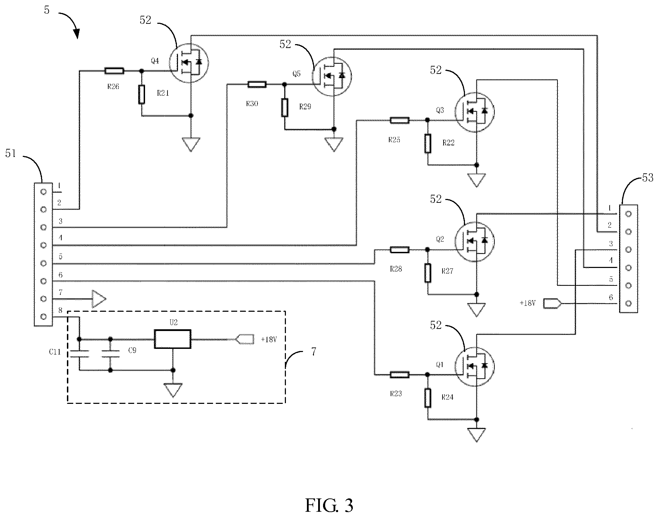

Referring to FIG. 3, FIG. 3 is a schematic diagram of the Bluetooth control circuit 5 provided by the present disclosure. The Bluetooth control circuit 5 includes a first Bluetooth soldering plate 51, a plurality of MOS transistors 52, and a second Bluetooth soldering plate 53.

The first Bluetooth soldering plate 51 is coupled to the connecting terminals of the control module 2, and the Bluetooth power supply module 7. The first Bluetooth soldering plate 51 also includes eight connecting terminals separately connected to the eight connecting terminals of the control module 2. An output pin 1 of the first Bluetooth soldering plate 51 is further connected to the Bluetooth power supply module 7 to access + 3.3V voltage.

The plurality of MOS transistors 52 are separately connected to the connecting terminals of the first Bluetooth soldering plate 51. The plurality of MOS transistors 52 are Q1-Q5 as shown in FIG. 3.

The second Bluetooth soldering plate 53 is coupled to the light-emitting unit 4. The plurality of MOS transistors 52 are separately coupled to the connecting terminals of the second Bluetooth soldering plate 53. Q1-Q5 are separately coupled to the connecting terminals 1-5 of the second Bluetooth soldering plate 53. Output pin 6 of the second Bluetooth soldering plate is connected to the power source driving module 6 to access operating voltage.

The circuit function of the Bluetooth control circuit 5 is as follows. After the Bluetooth control circuit 5 works, the internal MCU (the control module 2) receives the instruction of an intelligent terminal device. The control module 2 control true-off time of the five MOS transistors Q1, Q2, Q3, Q4, Q5 by outputting five PWM dimming and RGB signals.

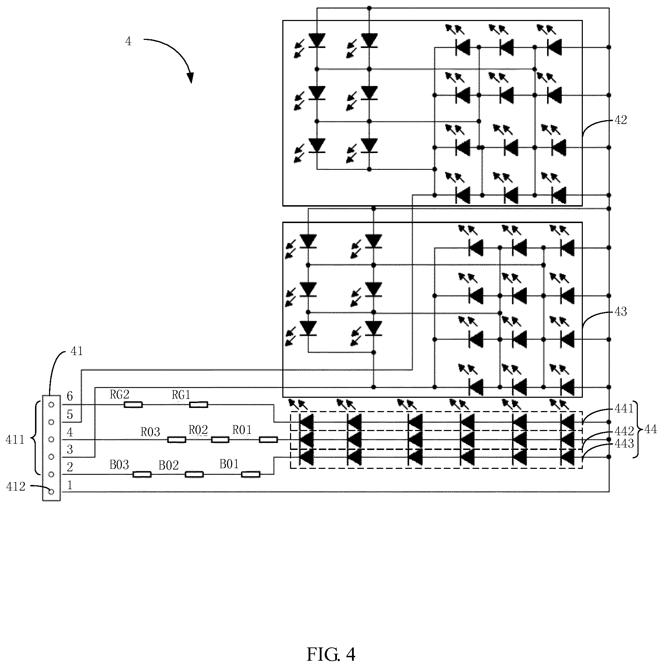

Referring to FIG. 4, FIG. 4 is a schematic diagram of a light-emitting unit 4 of present disclosure. The light-emitting unit 4 includes a unit soldering plate 41, a plurality of cold color temperature LED monochrome lamps 42, a plurality of warm color temperature LED monochrome lamps 43 and a plurality of RGB lamps 44.

Each RGB lamp 44 includes a R lamp 441, a G lamp 442 and a B lamp 443. The unit soldering plate 41 includes a plurality of cathode terminal 441 and an anode terminal 412. The plurality of cathode terminal 441 and the anode terminal 412 are separately coupled to the second Bluetooth soldering plate 53. The plurality of cathode terminal 441 are separately coupled to one side of the cold color temperature LED monochrome lamps 42, the warm color temperature LED monochrome lamps 43, the plurality of R lamps 441, the G lamps 442 and the B lamps 443. The anode terminal 412 is coupled to the power source driving module 6, and another side of the cold color temperature LED monochrome lamps 42, the warm color temperature LED monochrome lamps 43, the plurality of R lamps 441, the G lamps 442 and the B lamps 443. Connecting terminals 2-6 (cathode terminal 411) of the unit soldering plate 41 in connected to connecting terminals 1-5 of the second Bluetooth soldering plate 53. Connecting terminals 1 (anode terminal 412) of unit soldering plate 41 is connected to connecting terminal 6 of the second Bluetooth soldering plate 53 to apply working voltage + 18V.

Drains of 5 MOS transistors 52 are separately connected to cathodes of the R lamp 441, the R lamp 442, the B lamp 443, the cold color temperature LED monochrome lamps 42, and the warm color temperature LED monochrome lamps 43. Anode of the light-emitting unit 4 is directly connected to output anode of the power source driving module 6, that is, to the connecting terminal 6 of the unit soldering plate 41. The Bluetooth control circuit 5 controls the working state of each LED string by receiving the instructions of the intelligent terminal device, so as to control the color temperature change, the brightness change, and a variety of color changes of the output LED to achieve the color adjustment and the color adjustment.

Circuit of the light emitting unit 4 is mounted on an aluminum substrate, and then adhered to the heat sink of the bulb lamp by using a viscous thermal conductive silicone, and then uniformly illuminated by the bulb. The lighting unit 4 is composed of a 6PIN model 5050 RGB lamp beads and a single 1W lamp model 3030 lamp beads.

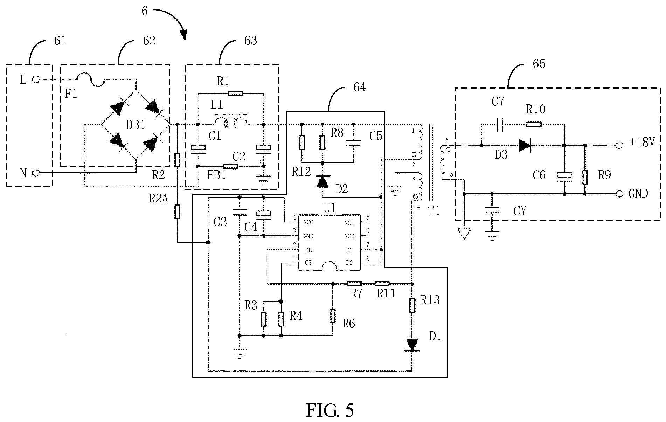

Referring to FIG. 5, FIG. 5 is a schematic structural diagram of a power supply driving module 6 according to the present invention. The power supply driving module 6 includes an AC input terminal 61, a rectifier circuit 62, a filter circuit 63, a drive control circuit 64, and a DC output circuit 65.

The AC input 61 is used for accessing 200-240V electric supply.

The rectifier circuit 62 is coupled to the AC input terminal 61.

The filter circuit 63 is coupled to the rectifier circuit 62.

The drive control circuit 64 is coupled to the filter circuit 63.

The DC output circuit 65 is coupled to the drive control circuit 64.

U1 in the drive control circuit 64 is an integrated packaged isolated LED drive control IC, model number FT838MBD, which forms a circuit that provides a stable voltage and current output for the rear stage circuit (that is the DC output circuit 65). The detailed working process is when the entire power supply is connected to the AC (AC) 220V, rectified by the bridge DB1 (that is the rectifier circuit 62), and then passes through the π-type filter composed of C1, C2, and L1. Since the drive control circuit 64 is internally integrated, switch tube and the logic circuit inside the drive control circuit 64 control the turn-on and turn-off of the switch tube, the transformer realizes the conversion of electromagnetic energy, and the stable voltage and current output are achieved through the control of the drive control circuit 64.

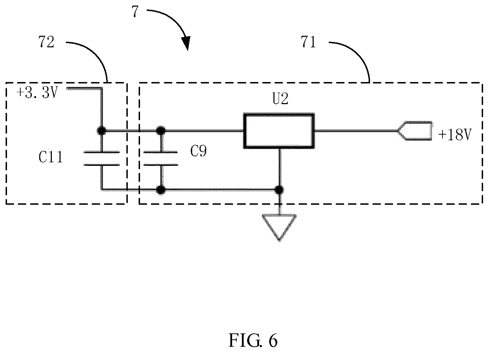

Referring to FIG. 6, FIG. 6 is a schematic structural diagram of a Bluetooth power supply module 7 according to the present invention. The Bluetooth power supply module 7 includes a linear buck circuit 71 and a Bluetooth filter circuit 72.

The linear buck circuit 71 is coupled to the DC output circuit 65.

The Bluetooth filter circuit 72 is coupled to the Bluetooth control circuit 5.

U3 model in the linear buck circuit 71 is LY7633. The linear buck circuit 71 is a typical linear buck circuit and functions to step down the 18V output from the power supply drive module 6 to a constant 3.3V. The approximate working flow of the circuit is as follows: When U3's pin 3 is powered on, U3 starts normal operation, and then outputs 3.3V voltage through pin 1 and connects to connecting terminal 8 of the first Bluetooth pad 51, and the C11 electrolytic capacitor filters.

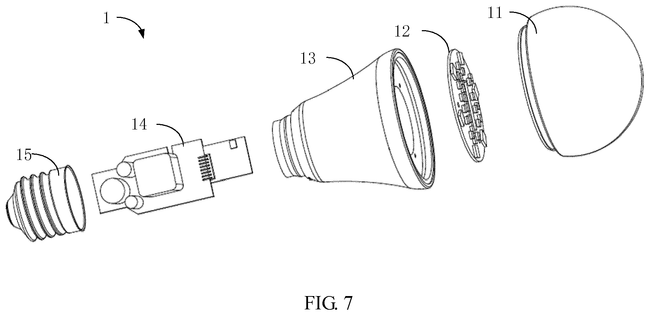

Referring to FIG. 7, FIG. 7 is a schematic structural diagram of a bulb lamp shell assembly 1 according to the present invention. The bulb lamp shell assembly 1 includes a bulb mask 11, a lamp panel 12, a bulb lamp shell 13, a circuit board 14 and a lamp cap connecting portion 15.

The bulb lamp cover 11 is buckled on front side of the bulb lamp shell 13 to form a receiving chamber. The lamp panel 12 is disposed in the receiving chamber and fixed to the bulb lamp shell 13.

The lamp cap connecting portion 15 is connected to rear side of the bulb lampshell 13. The circuit board 14 is fixed inside the bulb lamp housing 13.

The light emitting unit 4 is disposed in the lamp panel 12. The control module 2 and the Bluetooth control circuit 5 are disposed in the circuit board 14. The Bluetooth mesh module 3 is disposed on outer surface of the bulb lamp shell 13.

The present disclosure provides various operations for the embodiments. In one embodiment, one or more operations may constitute one or more computer-readable instructions stored in the computer-readable storage medium, which cause the computing device to perform the operations when be executed on the communication device. Some or all of the described sequence of operations should not be construed to imply that these operations are necessary to be dependent on the order. A person skilled in the art will appreciate that alternative orders may also have the advantages described in this specification. Moreover, it should be understood that not all of the operations must be presented in each of the embodiments provided herein.

Moreover, the word "preferred" used herein means serving as an embodiment, an illustration, or an example. As described herein, the term "preferred" is not necessary to be construed as any aspect or design superior to the other aspects or designs. Instead, the word exemplary manner is designed to specific concepts. In this application, the term "or" refers to an inclusive "or" rather than an exclusive "or." That is, unless specified otherwise, or clear from the context, "X using A or B" means any natural aimed inclusive replacement. That is, if X employs A; X employs B; or X employs both A and B, then "X using A or B" is satisfied by any of the aforementioned circumstances.

Furthermore, despite relative to one or more implementations shown and described in the present disclosure, the equivalent variations and modifications based on the present specification and drawings will occur to those skilled in the art upon reading and understanding. The present disclosure includes all such modifications and variations, and is only limited by the scope of the appending claims. Especially with regard to various functions performed by the above-described components (e.g., elements, resources, etc.), the terms used to describe such components are intended to indicate any component (unless otherwise indicated) corresponding to a specified function (for example, that is functionally equivalent) performed by the described components, even though not structurally equivalent to the disclosed structure carrying out the functions in the exemplary implementations of the present disclosure described in the content text. In addition, although a particular feature of the present disclosure may have been disclosed with respect to one of several embodiments, this feature can be combined with one or more other features in the other embodiments which are expected or advantageous to any given or particular application. Moreover, the terms "including", "having", "with", or variants thereof used in the detailed description or the claims are intended to be used in a manner similar to the term "comprising".

Various functional units according to the embodiments of the present disclosure may be integrated in one processing module or may exist as various separate physical units, or two or more units may be integrated in one module. The integrated module may be implemented through hardware, or may also be implemented in a form of a software functional module. When the integrated module is implemented in the form of the software functional module and sold or used as a separate product, the integrated module may also be stored in a computer readable storage medium. The storage medium may be a read only memory, a magnetic disk, an optical disk, or the like. The devices or systems may execute the method in the corresponding method embodiment.

Finally, the above descriptions are merely exemplary embodiments of the present disclosure, but not intended to limit the present disclosure. Any modification, equivalent replacement, or improvement made without departing from the spirit and principle of the present disclosure should fall within the protection scope of the present disclosure.

## Claims

1. A Bluetooth bulb lamp, comprising:
bulb lamp shell assembly;
a control module located inside of the bulb lamp shell assembly;
a Bluetooth mesh module used for receiving an external control signal via Bluetooth, coupled to the control module, and located on a surface of the bulb lamp shell assembly;
a light-emitting unit located inside of the bulb lamp shell assembly; and
a Bluetooth control circuit used for controlling lighting unit, coupled to the control module and the light-emitting unit.

2. The Bluetooth bulb lamp of claim 1, further comprising:
a power source driving module used for connecting to the utility power supply and providing DC power, coupled to the light-emitting unit;
a Bluetooth power supply module used for step-down DC power supply of the power source driving module, coupled to the power source driving module and the Bluetooth control circuit.

3. The Bluetooth bulb lamp of claim 1, wherein the bulb lamp shell assembly comprises a bulb mask, a lamp panel, a bulb lamp shell, a circuit board and a lamp cap connecting portion;
the bulb lamp cover buckled on front side of the bulb lamp shell to form a receiving chamber, the lamp panel is disposed in the receiving chamber and fixed to the bulb lamp shell;
the lamp cap connecting portion is connected to rear side of the bulb lampshell, the circuit board is fixed inside the bulb lamp housing;
light emitting unit is in the lamp panel;
the control module and the Bluetooth control circuit are disposed in the circuit board, the Bluetooth mesh module is disposed on outer surface of the bulb lamp shell.

4. The Bluetooth bulb lamp of claim 2, wherein the Bluetooth control circuit comprises:
a first Bluetooth soldering plate, coupled to connecting terminals of the control module and the Bluetooth power supply module;
a plurality of MOS transistors, separately connected to connecting terminals of the first Bluetooth soldering plate; and
a second Bluetooth soldering plate, coupled to the light-emitting unit, wherein the plurality of MOS transistors are separately coupled to connecting terminals of the second Bluetooth soldering plate.

5. The Bluetooth bulb lamp of claim 4, wherein the light-emitting unit comprises a unit soldering plate, a plurality of cold color temperature LED monochrome lamps, a plurality of warm color temperature LED monochrome lamps and a plurality of RGB lamps;
each RGB lamp comprises a R lamp, a G lamp and a B lamp;
the unit soldering plate comprises a plurality of cathode terminal and an anode terminal, the plurality of cathode terminals and the anode terminal are separately coupled to the second Bluetooth soldering plate;
the plurality of cathode terminals are separately coupled to one side of the cold color temperature LED monochrome lamps, the warm color temperature LED monochrome lamps, the plurality of R lamps, the G lamps and the B lamps;
the anode terminal is coupled to the power source driving module, and another side of the cold color temperature LED monochrome lamps, the warm color temperature LED monochrome lamps, the plurality of R lamps, the G lamps and the B lamps.

6. The Bluetooth bulb lamp of claim 5, further comprising a radio frequency module, coupled to the control module.

7. The Bluetooth bulb lamp of claim 6, wherein the radio frequency module comprises:
a radio frequency circuit, coupled to the control module;
a radio frequency antenna coupled to the radio frequency circuit.

8. The Bluetooth bulb lamp of claim 2, wherein the power source driving module comprises:
an input used for accessing electric supply;
a rectifier circuit coupled to the AC input terminal;
a filter circuit coupled to the rectifier circuit;
a drive control circuit coupled to the filter circuit; and
a DC output circuit coupled to the drive control circuit.

9. The Bluetooth bulb lamp of claim 8, wherein the Bluetooth power supply module comprises:
a linear buck circuit coupled to the DC output circuit;
a Bluetooth filter circuit coupled to the Bluetooth control circuit.
